# EUROPÄISCHE PATENTSCHRIFT

(11) **EP 0 897 344 B1**
(45) Veröffentlichungstag und Bekanntmachung des Hinweises auf die Patenterteilung: **23.02.2000**
(21) Anmeldenummer: 97922970.5
(22) Anmeldetag: 06.05.1997
(51) Int. Cl.: B60N 2/44

(54) **SITZ, INSBESONDERE FAHRZEUGSITZ**
SEAT, ESPECIALLY VEHICLE SEAT
SIEGE, NOTAMMENT SIEGE DE VEHICULE

(30) Priorität: 09.05.1996 DE 29608362 U
(43) Veröffentlichungstag der Anmeldung: 24.02.1999
(73) Patentinhaber: Pfau, Karl-Heinz, 72275 Alpirsbach (DE); Franke, Edgar, 98716 Lohr (DE)
(72) Erfinder: Pfau, Karl-Heinz, 72275 Alpirsbach (DE); Franke, Edgar, 98716 Lohr (DE)
(74) Vertreter: Reinhardt, Harry
(86) Internationale Anmeldenummer: EP9702293
(87) Internationale Veröffentlichungsnummer: WO9743143

(56) Entgegenhaltungen:
- FR-A- 2 691 114
- US-A- 4 938 529
- US-A- 5 213 392

## Beschreibung

Die Erfindung betrifft einen Sitz, insbesondere Fahrzeugsitz nach dem Oberbegriff des Anspruches 1.

Derartige Fahrzeugsitze, wie z.B. aus der US-A-4 938 529 bekannt, besitzen heute zumeist einen die Sitzfläche stabilisierenden Rahmen, vorzugsweise in Form eines Bandstahlrahmens. Dieser Bandstahlrahmen ist in die Polsterung eingeschäumt. Die Polsterung ihrerseits besitzt Seitenpolster, die die Aufgabe haben, die Fahrzeuginsassen auch seitlich abzustützen. Gerade bei Kurvenfahrten oder seitlichen Stößen entsteht jedoch eine äußerst starke seitliche Belastung der Seitenpolster, wobei es zu einer Deformierung kommen kann, da die Rückfederung des Rahmens nicht ausreichend wirksam wird.

Aus der US-A-5 213 392 ist ein Fahrzeugsitz bekannt, dessen Rückenlehne Versteifungselemente mit Verbindern aufweist. Allerdings sind die dort angegebenen Verbinder nicht verschiebbar, so daß eine Anpassung der Rückfederung des Rahmens nicht möglich ist. Ferner sind die Seitenteile des Rahmens nicht durch ein Querteil zusätzlich verbunden.

Ferner ist aus der FR-A 2,691,114 eine Versteifung eines Rahmens für eine Rückenlehne oder Sitzfläche entnehmbar, ohne jedoch die spezifische Anordnung des zusätzlichen Versteifungselements oder dessen anpaßbare Rückfederung vorzusehen.

Ausgehend von diesem Stand der Technik liegt der vorliegenden Erfindung die Aufgabe zugrunde, einen Sitz der eingangs genannten Gattung derart weiterzubilden, daß dieser auch seitlichen Belastungen gewachsen ist.

Diese Aufgabe wird durch einen Sitz mit den kennzeichnenden Merkmalen des Anspruches 1 gelöst.

Auf die Querteile des Rahmens, die die in die Seitenpolster eingreifenden Seitenteile miteinander verbinden, kann zu diesem Zweck ein Versteifungselement aufgebracht werden. Dieses Versteifungselement ist über Verbinder, deren Abstand zueinander veränderlich ist, befestigt, so daß je nach Abstand der Verbinder die Rückfederung den entsprechenden Erfordernissen angepaßt werden kann, so daß der Fahrzeugsitz in seiner gewünschten Ursprungsform verbleibt. Verfolgt wird dabei das Prinzip des doppelten Biegebalkens, so daß je nach Querschnitt des Versteifungselements und Verschiebung der Klammern eine entsprechend definierbare Rückfederung erfolgt.

Kurze Beschreibung der Zeichnungen
- Fig. 1: Einen Schnitt durch die Sitzfläche eines Fahrzeugsitzes,
- Fig. 2: eine Draufsicht auf den Rahmen.

Die Erfindung wird jetzt beispielhaft unter bezug auf die beigefügten Zeichnungen erläutert. Allerdings handelt es sich bei den Ausführungsbeispielen lediglich um Beispiele, die nicht das erfinderische Konzept auf eine bestimmte physikalische Anordnung beschränken sollen.

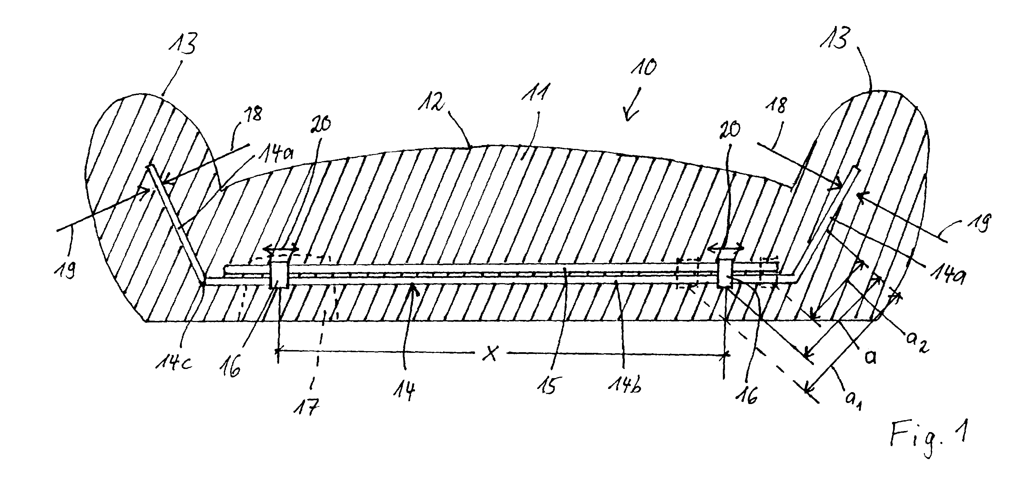

Gemäß Fig. 1 weist ein Sitz, bei dem es sich um einen Fahrzeugsitz 10, jedoch auch um einen beliebigen anderen Sitz handeln kann, eine mit Polsterung 11 versehene Sitzfläche 12 auf. Die Polsterung wird seitlich durch Seitenpolster 13 ergänzt, die den Benutzer seitlich abstützen. Im Sitz selbst ist ein den Sitz stabilisierender Rahmen 14 aufgenommen, der mit seinen Seitenteilen 14a bis in die Seitenpolster 13 geführt ist. Bei diesem Rahmen, der im übrigen die Seitenteile 14a verbindende Querteile 14b aufweist, handelt es sich um einen Bandstahlrahmen, er kann jedoch auch aus anderen Materialien wie z.B. Kunststoffen oder faserverstärkten Kunststoffen hergestellt sein, die über die entsprechenden elastischen Eigenschaften verfügen.

An wenigstens einem der Querteile 14b, vorzugsweise an dem der Sitzvorderkante benachbarten Querteil, ist ein zusätzliches Versteifungselement 15 befestigbar. Dieses Versteifungselement 15 versteift zumindest den Mittelbereich des Querteils 14b und ist zu diesem Zweck mittels wenigstens zwei entlang des Querteils 14b verschiebbaren Verbindern 16 am Querteil befestigbar. Durch diese Ausführungsform ergibt sich im Mittelbereich ein doppelter Biegebalken, so daß bei einer seitlichen Belastung 18 dieser eine entsprechende Rückfederung 19 entgegengebracht werden kann, um den Sitz in seiner ursprünglichen Form zu halten.

Auf der rechten Seite der Fig. 1 ist verdeutlicht, daß der Verbinder 16 in Richtung des Pfeils 20 entlang dem Querteil 14b in weitere gestrichelte Positionen überführt werden kann. Dabei ändert sich der Abstand x der beiden Verbinder zueinander, was die Steifigkeit und die Rückfederung 19 der Seitenpolster 13 beeinflußt. Während beim Abstand x als Hebelarm der angreifenden Rückfederungskraft sich der Hebelarm a ergibt, wird dieser Hebelarm als Hebelarm al größer und damit die Steifigkeit des Seitenpolsters 13 geringer, wenn der Verbinder 16 in die gestrichelte Position nach links verschoben wird, und der Hebelarm wird zum kleineren Hebelarm a2, wenn der Verbinder 16 in die gestrichelte Position nach rechts verschoben wird, was zu einer Erhöhung der Steifigkeit führt.

Das aufgeklammerte Versteifungselement, das z.B. ein Draht oder ein beliebiges Profil sein kann und aus Kunststoff oder Metall besteht, bewirkt somit bei seitlicher Belastung je nach Drahtdurchmesser und Verschiebung der Klammern eine definierbare und zu bemessende Rückfederung. Durch das Einsetzen verschiedener gehärtet und angelassener Federbandstähle und verschiedener Drahtdurchmesser ist der Rahmen sehr variabel, so daß eine Bemessung auf die unterschiedlichsten Beanspruchungen und Rückfederungen möglich ist. Bedarfsweise ist es sogar möglich, die Rückfederung an das Körpergewicht des Benutzers anzupassen. Zu diesem Zweck muß dann jedoch der Verbinder 16 in einer Aussparung 17 der Polsterung 11 angeordnet werden, die in Fig. 1 auf der linken Seite gestrichelt dargestellt ist. In diesem Fall kann dann die Werkstatt oder der Fahrzeugbenutzer selbst die Klammern bedarfsweise verschieben, um eine Körpergewichtsanpassung zu erreichen. Üblicherweise wird jedoch der Rahmen 14 mitsamt Versteifungselement und Verbindern in die Polsterung 11 eingeschäumt.

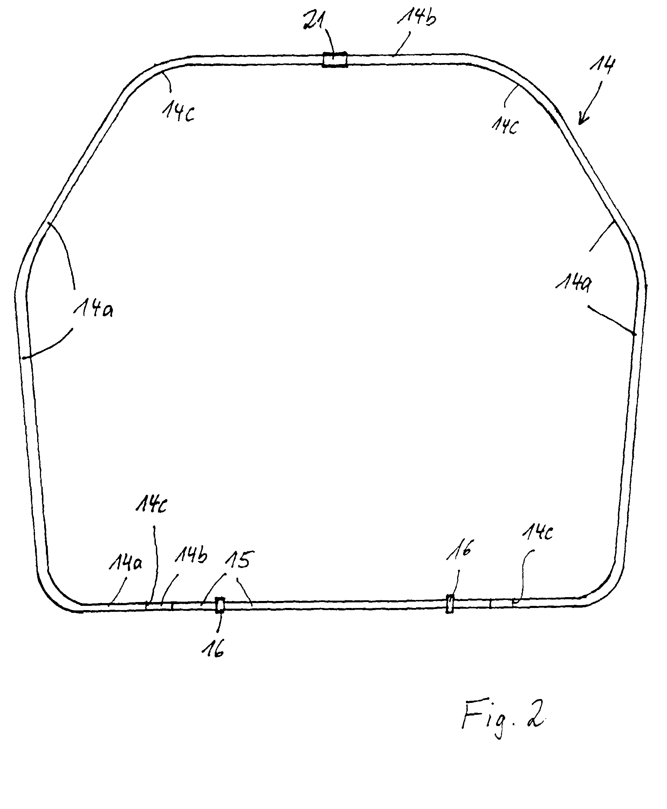

Fig. 2 verdeutlicht den Aufbau des Rahmens. Der Rahmen besteht in diesem Fall aus Bandstahl, der über den Verbinder 21 zu einem Rahmen geschlossen ist. Im vorderen Bereich ist auf den Rahmen das Versteifungselement 15 mit den Verbindern 16 angebracht. Der Rahmen besitzt einerseits Querteile 14b, die über die Biegebereiche 14c in die Seitenteile 14a übergehen.

## Patentansprüche

1. Sitz, insbesondere Fahrzeugsitz (10), mit einer mit Polsterung (11) versehenen Sitzfläche (12) mit den Benutzer seitlich abstützenden Seitenpolstern (13) sowie mit einem im Sitz aufgenommenen und diesen stabilisierenden Rahmen (14), der mit seinen Seitenteilen (14a) bis in die Seitenpolster (13) geführt ist,
dadurch gekennzeichnet, daß an wenigstens einem die Seitenteile (14a) des Rahmens (14) verbindenden Querteil (14b) ein zusätzliches, zumindest den Mittelbereich des Querteils (14b) versteifendes Versteifungselement (15) mittels wenigstens zwei entlang des Querteils (14b) verschiebbaren Verbindern (16) befestigbar ist.

2. Sitz nach Anspruch 1, dadurch gekennzeichnet, daß mit zunehmendem Abstand (x) der zwei als Klemmen ausgebildeten Verbinder (16) zueinander die Steifigkeit und Rückfederung (19) der Seitenpolster (13) zunimmt.

3. Sitz nach Anspruch 1, dadurch gekennzeichnet, daß die Verbinder (16) in Aussparungen (17) der Polsterung (11) zugänglich angeordnet und verschiebbar sind.

4. Sitz nach Anspruch 1, dadurch gekennzeichnet, daß der Rahmen (14) mit Querteilen (14b) und Seitenteilen (14a) ein zumindest teilweise in den Sitz eingeschäumter Bandstahlrahmen ist.

5. Sitz nach Anspruch 1, dadurch gekennzeichnet, daß das Versteifungselement (15) am einer Sitzvorderkante benachbarten Querteil (14b) befestigt ist.

## Claims

1. Seat, more especially a vehicle seat (10), having a sitting area (12) which is provided with upholstery (11), lateral cushions (13) which support the user laterally, and a frame (14) which is accommodated in the seat and stabilises said seat, said frame extending into the lateral cushions (13) with its lateral portions (14a),
characterised in that an additional reinforcing member (15) is securable on at least one transverse portion (14b), which connects the lateral portions (14a) of the frame (14), by means of at least two connectors (16), which are displaceable along the transfer portion (14b), said additional reinforcing member reinforcing at least the central region of the transverse portion (14b).

2. Seat according to claim 1, characterised in that the rigidity and spring-back resilience (19) of the lateral cushions (13) increase as the spacing (x) between the two connectors (16), which are configured as clips, increases.

3. Seat according to claim 1, characterised in that the connectors (16) are accessibly disposed in recesses (17) of the upholstery (11) and are displaceable.

4. Seat according to claim 1, characterised in that the frame (14), with transverse portions (14b) and lateral portions (14a), is a strip steel frame which is at least partially moulded into the seat.

5. Seat according to claim 1, characterised in that the reinforcing member (15) is secured on the transverse portion (14b) adjacent a front edge of the seat.

## Revendications

1. Siège, en particulier siège de véhicule (10), comportant une surface d'assise (12) pourvue d'un rembourrage (11) avec coussins latéraux (13) soutenant latéralement l'utilisateur, et un cadre (14) monté dans le siège et le stabilisant, dont les parties latérales (14a) vont jusque dans les coussins latéraux (13), caractérisé par le fait qu'à au moins une partie transversale (14b) reliant les parties latérales (14a) du cadre (14) peut être fixé au moyen d'au moins deux raccords (16) déplaçables le long de la partie transversale (14b) un élément supplémentaire de renfort (15) qui renforce au moins la partie médiane de la partie transversale (14b).

2. Siège selon la revendication 1, caractérisé par le fait que lorsque la distance (x) entre les deux raccords (16), constitués de pinces, augmente, la rigidité et la reprise élastique (19) des coussins latéraux (13) augmente.

3. Siège selon la revendication 1, caractérisé par le fait que les raccords (16) sont montés accessibles et déplaçables dans des évidements (17) du rembourrage (11).

4. Siège selon la revendication 1, caractérisé par le fait que le cadre (14) à parties transversales (14b) et parties latérales (14a) est un cadre en feuillard d'acier noyé au moins en partie dans la matière alvéolaire du siège.

5. Siège selon la revendication 1, caractérisé par le fait que l'élément de renfort (15) est fixé à la partie transversale (14b) voisine du bord avant du siège.
